# EUROPÄISCHE PATENTANMELDUNG

(11) **EP 0 731 544 A2**
(43) Veröffentlichungstag der Anmeldung: **11.09.1996**
(21) Anmeldenummer: 96103261.2
(22) Anmeldetag: 02.03.1996
(51) Int. Cl.: H02H 7/08, H02H 3/26

(54) **Verfahren und Einrichtung zur Betriebsüberwachung von mindestens zwei parallel betriebenen Motoren**

(30) Priorität: 07.03.1995 DE 19507723
(71) Anmelder: Licentia Patent-Verwaltungs-GmbH, D-60596 Frankfurt (DE)
(72) Erfinder: Berghoff, Markus, Dipl.-Ing., 59581 Warstein (DE)
(74) Vertreter: Erbacher, Alfons, Dipl.-Ing.

(57) **Zusammenfassung**

Es gibt Anlagen mit am Netz betriebenen Motoren, bei denen der ordnungsgemäße Lauf der Motoren (M1, M2) für eine sicheren Betrieb der Anlagen wichtig ist. Vorteilhaft ist in solchen Fällen eine automatische Betriebsüberwachung der Motoren (M1, M2).

Mit dem erfindungsgemäßen Verfahren zur Betriebsüberwachung wird eine Störmeldung erzeugt, wenn eine Phasenverschiebung zwischen den Wechselströmen auftritt, die in mindestens zwei parallel betriebene Motoren (M1, M2) fließen. Die Phasenverschiebung wird überwacht, indem das Verhältnis der zeitgleich auftretenden Stromamplituden verglichen wird mit dem Verhältnis bei störungsfreiem Lauf der Motoren (M1, M2).

## Beschreibung

Die Erfindung betrifft
- ein Verfahren zur Betriebsüberwachung von mindestens zwei parallel betriebenen Motoren, die zusammen aus gemeinsamen, von einem Wechselstrom durchflossenen Versorgungsleitungen eines Stromnetzes versorgt werden und denen jeweils eine Stromleitung zugeordnet ist, welche von einem von dem Betriebszustand des Motors abhängigen Wechselstrom durchflossen wird,
und
- eine Betriebsüberwachungseinrichtung mit mindestens zwei parallel betriebenen Motoren, die zusammen aus gemeinsamen, von einem Wechselstrom durchflossenen Versorgungsleitungen eines Stromnetzes versorgt werden und denen jeweils eine Stromleitung zugeordnet ist, welche von einem von dem Betriebszustand des Motors abhängigen Wechselstrom durchflossen wird, mit einem Wandlungselement in jeder dieser Stromleitungen, welches ein zu dem jeweiligen Strom proportionales Signal erzeugt, und mit einer Vergleichseinrichtung mit Eingängen, wobei jeder Motor einem Eingang zugeordnet ist und wobei im störungsfreien Betrieb die Signalpegel an allen Eingängen sich nicht voneinander unterscheiden und im Falle unterschiedlicher Signalpegel die Vergleichseinrichtung eine Störmeldung auslöst.

Aus der US-A-5 168 236 ist eine Betriebsüberwachungseinrichtung für mehrere Verbraucher bekannt, die parallel an einem Dreiphasennetz betrieben werden. Zusätzlich ist parallel zu den Verbrauchern eine Referenzschaltung angeschlossen. Die Verbraucher und die Referenzschaltung erzeugen während des Betriebes vom Betriebszustand abhängige Spannungssignale, die einer Vergleichseinrichtung zugeführt werden. Durch Vergleich der anliegenden Signale wird festgestellt, ob eine Störung vorliegt.

Nachteilig bei dieser Betriebsüberwachungseinrichtung ist die Notwendigkeit einer eigenen Referenzschaltung.

Aus der DE-B-4 006 505 ist eine Betriebsüberwachungseinrichtung für einen Gleichstrommotor bekannt. Im Falle zweier parallel geschalteter Gleichstrommotoren ist jedem eine eigene Betriebsüberwachungseinrichtung zugeordnet, die beide unabhängig voneinander betrieben werden und nicht miteinander gekoppelt sind. Die Betriebsüberwachungseinrichtungen benötigen Referenzspannungen, über deren Bereitstellung nichts erwähnt ist.

Der Erfindung liegt die Aufgabe zugrunde, zum einen ein Verfahren zur Betriebsüberwachung von mindestens zwei aus einer gemeinsamen Netzphase gleichzeitig versorgten parallel betriebenen Motoren bereitzustellen, mit Hilfe dessen auf einfache Weise der ordnungsgemäße Lauf der Motoren selbsttätig überwacht werden kann, und zum andern eine Betriebsüberwachungseinrichtung zu schaffen, mit Hilfe derer insbesondere ein solches Verfahren ausgeführt werden kann. Dabei soll es unerheblich sein, ob die Anzahl der parallel betriebenen Motoren gerade oder ungerade ist.

Diese Aufgabe wird erfindungsgemäß zum einen dadurch gelöst,
- daß jede Stromleitung in einem vorgebbaren Stromkreis mit dem zugeordneten Motor liegt, daß alle diese Stromkreise der Motoren zusammen von einer gemeinsamen Phase des Stromnetzes gespeist werden, daß die zeitgleich in den Stromleitungen auftretenden Stromstärken miteinander verglichen werden und daß eine Störmeldung ausgelöst wird, wenn das Verhältnis der Stromstärken zueinander von ihrem Verhältnis bei störungsfreiem Lauf der Motoren abweicht,
und zum andern dadurch,
- daß jede Stromleitung in einem vorgebbaren Stromkreis mit dem zugeordneten Motor liegt, daß alle diese Stromkreise der Motoren zusammen von einer gemeinsamen Phase des Stromnetzes gespeist werden, daß die Stromleitungen jeweils ein Wandlungselement aufweisen, welches ein dem aus der gemeinsamen Phase zu dem Motor fließenden Strom proportionales elektrisches Signal erzeugt, daß die Signale dieser Wandlungselemente parallel jeweils einem eigenen Pegelgeber zugeführt werden, der abhängig von der Größe des Eingangssignals lediglich einen von zwei möglichen Pegeln, die den beiden Zuständen der binären Logik entsprechen, an seinem Ausgang erzeugt, daß die dort am Ausgang zeitgleich auftretenden Pegel bei störungsfreiem Lauf der Motoren den gleichen logischen Zuständen entsprechen, daß die Pegel an eine Vergleichseinrichtung geleitet werden und daß diese Vergleichseinrichtung eine Störmeldung hervorruft, wenn nicht diese zeitgleich anliegenden Pegel demselben logischen Zustand entsprechen.

Das erfindungsgemäße Verfahren beruht auf der Überlegung, daß bei ordnungsgemäßem Lauf der parallel betriebenen Motoren die Phasenlagen der Wechselströme in den Stromkreisen mit den Motoren übereinstimmen. Sobald dies nicht mehr der Fall ist, wird eine Störmeldung ausgelöst. Erfindungsgemäß wird der Vergleich der Phasenlagen durch Vergleich der gleichzeitig auftretenden Stromamplituden vorgenommen. Hierbei muß berücksichtigt werden, daß im Falle von parallel betriebenen Motoren, die im störungsfreien Betrieb unterschiedliche Leistungen aufnehmen, die Augenblickswerte der Spannungen auch bei übereinstimmenden Phasenlagen nicht gleich groß sind. Allerdings haben in diesem Fall die Augenblickswerte ein bestimmtes Verhältnis zueinander; bei einer Störung eines Motors ändert sich dieses Verhältnis.

Mitunter ist es aus Sicherheitsgründen erforderlich, daß in einer Anlage Wechselstrommotoren laufen. Beispielsweise können bei Anlagen zur unterbrechungsfreien Stromversorgung (USV), die mit (Blei-)Akkumulatoren ausgerüstet sind, während eines Aufladevorgangs explosive oder säurehaltige Gase aus den Akkumulatoren austreten. Diese Gase sollten mittels Lüftern aus dem betreffenden Raum fortgeblasen werden. Eine automatische Fernüberwachung des ordnungsgemäßen Laufes der die Lüfter antreibenden Lüftermotoren erhöht die Sicherheit des Gesamtsystems.

Die Motoren werden über Zuleitungen versorgt, die von Wechselstrom durchflossen sind. Als Motoren eignen sich beispielsweise Gleichstrom-, Wechselstrom- oder Drehstrommotoren, wobei im Falle von Gleichstrommotoren diesen jeweils ein Gleichrichter vorgeschaltet sein muß; es wird dann für die Betriebsüberwachung die Stromstärke des in den Gleichrichter hineinfließenden Wechselstroms berücksichtigt. Selbstverständlich ist auch eine Betriebsüberwachung verschiedenartiger parallel betriebener Motoren, beispielsweise von Gleichstrom- und Wechselstrommotoren möglich.
Das erfindungsgemäße Verfahren kann in einem Rechner als Programm implementiert werden.
Als eine weitere Maßnahme zur Betriebsüberwachung der Motoren ist es denkbar, daß die Spannungen an den Wechselstrommotoren überwacht werden und daß bei Sinken mindestens einer der überwachten Spannungen unter einen vorgegebenen Wert eine Störmeldung ausgelöst wird. Ein solches Sinken der Spannung kann beispielsweise durch einen Kurzschluß in dem betreffenden Motor verursacht sein.

Das dem Wechselstrom proportionale, in der Betriebsüberwachungseinrichtung erzeugte elektrische Signal kann ein kontinuierlicher Spannungsverlauf sein, der einem Schmitt-Trigger zugeführt wird. Dieser erzeugt stets einen von zwei möglichen logischen Pegeln (High-Pegel oder Low-Pegel).

Die erfindungsgemäße Betriebsüberwachungseinrichtung kann als Bestandteil eines Wandlungselementes, das aus dem Wechselstrom eine proportionale Spannung erzeugt, einen Optokoppler enthalten. Damit wird eine galvanische Trennung zwischen der Stromleitung, die den Strom zu dem jeweiligen Motor führt, und den elektronischen Bauelementen erreicht, die den Vergleich der zeitgleichen Stromstärken in den Stromleitungen durchführen.

Die Betriebsüberwachungseinrichtung arbeitet erst bei einer Mindestanzahl von zwei an einer einzigen Netzphase gleichzeitig betriebenen Motoren. Unter dieser Voraussetzung ist mindestens ein Motor parallel in Betrieb und kann somit als Bezugselement (Referenzelement) dienen.

Mit der Betriebsüberwachungseinrichtung läßt sich feststellen, ob mindestens ein Motor in seinem Lauf blockiert ist, sofern mindestens ein anderer (als Bezugselement dienender) ordnungsgemäß läuft.
Durch die Ausgabe einer Störmeldung läßt sich eine Reparatur durch das Wartungspersonal veranlassen.

Wenn bei Fertigung der Betriebsüberwachungseinrichtung noch nicht feststeht, wie viele parallel betriebene Motoren überwacht werden sollen, ist es günstig, wenn die Vergleichseinrichtung mit mehreren Antivalenz-Gattern, denen jeweils die Ausgänge von genau zwei Schmitt-Triggern vorgeschaltet sind, ausgerüstet wird. Bei der Montage vor Ort werden später - durch Öffnen bzw. Schließen von dafür vorgesehenen Schaltern - nur so viele Antivalenz-Gatter an die gemeinsame, einen Bestandteil der Vergleichsschaltung bildende Sammelschiene angeschlossen, wie für die jeweilige Anzahl an parallel betriebenen und überwachten Motoren erforderlich ist.

Bei der Betriebsüberwachung parallel betriebener Drehstrommotoren braucht der Stromfluß aus lediglich einer einzigen (für alle Motoren einheitlichen) Netzphase berücksichtigt zu werden. Es werden die Ströme, die von dieser Netzphase zu den parallel betriebenen Drehstrommotoren fließen, bezüglich ihrer Phasenlage miteinander verglichen. Wenn in einem Drehstrommotor eine Störung auftritt, wirkt sich dies auf alle seine drei Phasen aus.

Im folgenden wird ein Ausführungsbeispiel der Erfindung anhand von fünf Zeichnungen, aus denen sich weitere Einzelheiten und Vorteile ergeben, näher beschrieben.

Es zeigen:
- Fig. 1: ein Blockschaltbild für eine Betriebsüberwachungseinrichtung,
- Fig. 2: einen Schaltplan für die Überwachung von zwei Wechselstrommotoren,
- Fig.3: einen Schaltplan für die Überwachung von vier Wechselstrommotoren,

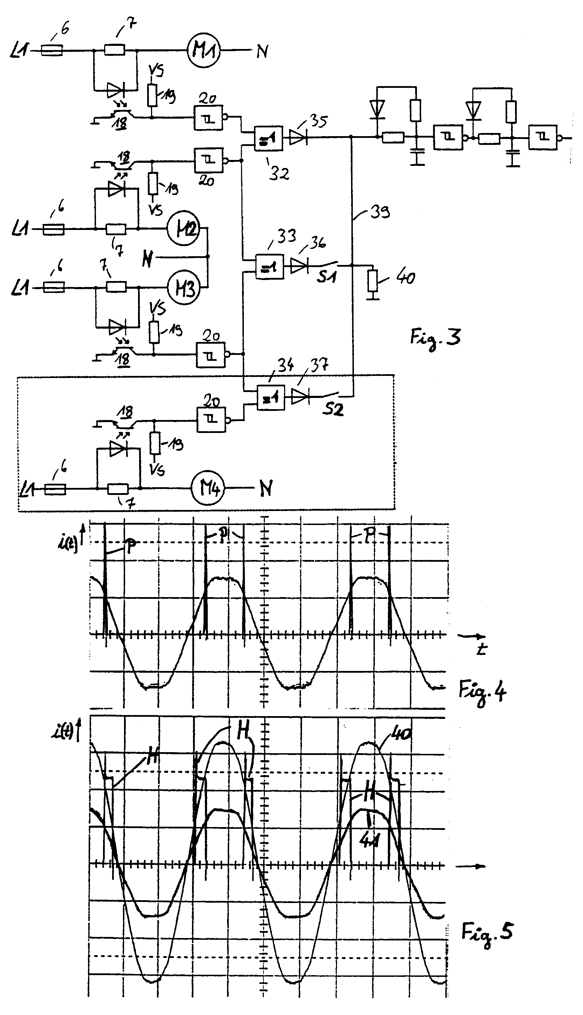

- Fig. 3: den Stromverlauf bei zwei störungsfrei laufenden Wechselstrommotoren,
- Fig. 4: den Stromverlauf bei zwei Wechselstrommotoren mit einer Phasendifferenz der Ströme,

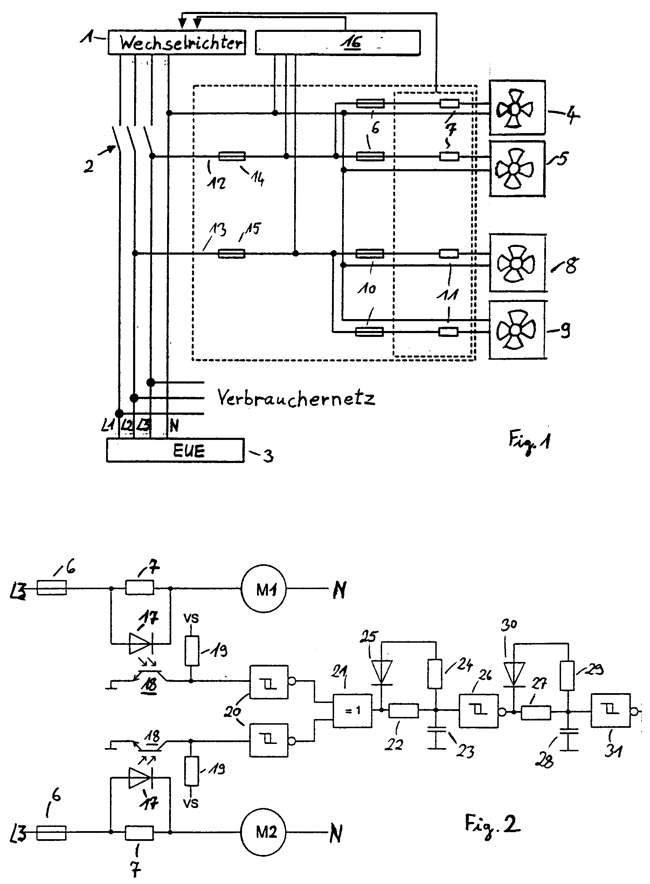

Fig. 1 zeigt ein Drehstromsystem mit drei Netzphasen L1, L2 und L3 und einem Nulleiter N; es sind also vier Versorgungsleitungen des Stromnetzes vorhanden. An einen Wechselrichter 1 sind (in der Fig. nicht dargestellte) Akkumulatoren geschaltet, die im Falle einer Netzstörung die Stromversorgung für die Netzphasen L1, L2 und L3 sicherstellen. Bei dem in der Fig. dargestellten System handelt es sich um eine Anlage zur unterbrechungsfreien Stromversorgung (USV). Bei störungsfreiem Netzbetrieb werden die Akkumulatoren über einen ans Netz angeschlossenen (ebenfalls nicht dargestellten) Gleichrichter versorgt (Ladeerhaltung). Über den Wechselrichter 1 werden gleichzeitig die Netzphasen L1, L2 und L3 mit Drehstrom versorgt. An die Netzphasen L1, L2 und L3 sind Verbraucher angeschlossen (Abzweigung zum Verbrauchernetz). Bei ungestörtem Betrieb sind Schalter 2, die in den Netzphasen L1, L2 und L3 zwischen den Wechselrichter 1 und der Abzweigung zum Verbrauchernetz angeordnet sind, geschlossen.
Bei einer Störung der Versorgung über den Wechselrichter 1 werden die Netzphasen L1, L2 und L3 über eine elektronische Unmschalteinrichtung 3 (EUE) unmittelbar aus dem Stromnetz gespeist. Die elektronische Umschalteinrichtung 3 ist an dem dem Wechselrichter 1 gegenüberliegenden Ende der Netzphasen L1, L2 und L3 angeschlossen. Zwischen die Netzphase L3 und den Nulleiter N sind zwei baugleiche Wechselstrommotoren 4 und 5 für Lüfter parallel geschaltet. In die Hetzzuführungsleitung zu den beiden Wechselstrommotoren sind jeweils eine Sicherung 6 und ein ohmscher Widerstand 7 gelegt.
In der gleichen Weise sind zwei Wechselstrommotoren 8 und 9 für zwei weitere Lüfter zwischen die Netzphase L2 und den Nulleiter N geschaltet. Auch diesen Wechselstrommotoren 8 und 9 sind jeweils eine Sicherung 10 und ein Widerstand 11 vorgeschaltet.
Der Strom für die beiden jeweils parallel aus einer Netzphase L3 oder L2 versorgten Wechselstrommotoren 4, 5 und 8, 9 fließt durch jeweils eine Netzzuleitung 12 und 13 über eine (jeweils beiden nachgeschalteten Wechselstrommotoren 4 und 5 bzw. 8 und 9) gemeinsame Vorsicherung 14 und 15; hinter diesen Vorsicherungen 14 und 15 teilen sich die beiden Netzzuleitungen 12 und 13 in zwei Zweige mit den Sicherungen 6 und 10 und den Widerständen 7 und 11, wobei über jeden Zweig die zwei parallel verschalteten Wechselstrommotoren 4 und 5 bzw. 8 und 9 versorgt werden.

Wie das Verbrauchernetz sind auch die Netzzuleitungen 12 und 13 zwischen die Schalter 2 und die elektronische Umschalteinrichtung 3 an die Netzphasen L1, L2 und L3 angeschlossen.

An die beiden Netzzuleitungen 12 und 13 ist eine gemeinsame Spannungsüberwachungeinrichtung 16 geschaltet. Diese Spannungsüberwachungseinrichtung 16 erfaßt ein Sinken der Versorgungsspannung für die Wechselstrommotoren 4, 5, 8 und 9 und veranlaßt daraufhin das Aussenden eines Meldesignals an die unterbrechungsfreie Stromversorgung.

Fig. 2 zeigt einen Schaltplan für die Überwachung des Stromes von zwei parallel betriebenen Motoren M1 und M2, die beispielsweise den beiden Wechselstrommotoren 4 und 5 aus Fig. 1 entsprechen.
Die Motoren M1 und M2 werden beide an der Netzphase L3 betrieben, und zwar sind sie dazu zwischen die Netzphase L3 und den Nulleiter N geschaltet. Vor die beiden Motoren M1 und M2 sind - wie in Fig. 1 ersichtlich - jeweils ein Widerstand 7 und eine Sicherung 6 geschaltet. Parallel zu den Widerständen 7 liegt jeweils eine Photodiode 17. Gegenüber den beiden Photodioden 17 ist jeweils ein Phototransistor 18 angeordnet; die Photodioden 17 und die Phototransistoren 18 bilden folglich zwei Optokoppler.
Die beiden Phototransistoren 18 werden mit offenem Basisanschluß betrieben. Ihre Kollektoranschlüsse sind über jeweils einen ohmschen Widerstand 19 mit einer Gleichspannung VS verbunden. Die Kollektor-Emitter-Spannung der beiden Phototransistoren 18 wird jeweils einem invertierenden Schmitt-Trigger 20 zugeleitet. Wenn der Augenblickswert der Kollektor-Emitter-Spannung eines Phototransistors einen bestimmten Grenzwert übersteigt, ist am invertierenden Ausgang des zugehörigen Schmitt-Triggers 20 ein High-Pegel, andernfalls ein Low-Pegel.
Die beiden Ausgänge der Schmitt-Trigger 20 sind an ein gemeinsames Antivalenz-Gatter 21 geführt, welches nur dann einen High-Pegel abgibt, wenn die logischen Zustände an den Ausgängen der beiden Schmitt-Trigger 20 voneinander verschieden sind.

An den Ausgang des Antivalenz-Gatters 21 ist eine Reihenschaltung eines Widerstandes 22 und eines Kondensators 23 angeschlossen. Parallel zu dem Widerstand 22 liegt ein weiterer Widerstand 24 und - zu diesem in Reihe - eine Diode 25. Die Diode ist mit ihrer Kathode an dem Ausgang des Antivalenz-Gatters angeschlossen.

Parallel zu dem Kondensator 23 ist ein weiterer Schmitt-Trigger 26 mit einem invertierenden Ausgang angeschlossen. Bei einem High-Pegel an seinem Eingang gibt er ebenfalls einen High-Pegel ab. Am Ausgang des Schmitt-Triggers ist eine Reihenschaltung eines Widerstandes 27 und eines Kondensators 28. Parallel zu dem Widerstand 27 befinden sich in einer Reihenschaltung ein weiterer Widerstand 29 und eine Diode 30. Die Diode 30 ist mit ihrer Kathode an dem Ausgang des Schmitt-Triggers 26 angeschlossen.

Parallel zu dem Kondensator 28 ist ein weiterer Schmitt-Trigger 31 mit invertierendem Ausgang angeordnet.

Bei einem High-Pegel am Ausgang des Antivalenz-Gatters 21 liegt am Ausgang des letztgenannten Schmitt-Triggers 31 ebenfalls ein High-Pegel, der ein Störmeldungssignal für die Ausgabe einer Störmeldung darstellt. Dieses Störmeldungssignal tritt nur dann auf, wenn der in einen der beiden Motoren M1 oder M2 fließende Strom einen vorgegebenen Grenzwert überschritten hat und der in den anderen Motor M2 oder M1 fließende Strom (noch) nicht diesen Grenzwert erreicht hat oder wenn der in einen Motor M1 oder M2 fließende Strom einen Grenzwert unterschritten hat, während der Strom des anderen Motors M2 oder M1 noch über diesem letztgenannten Grenzwert liegt. Die genannten (vorgegebenen) Grenzwerte können gleich groß sein oder unterschiedliche Werte haben.

Die beiden Optokoppler erfassen die Ströme zu den Motoren M1 und M2 und sorgen für eine galvanische Trennung zwischen dem Motorstromkreis und dem (zuvor beschriebenen) Stromkreis der Betriebsüberwachung.
In Fig. 3 ist ein Schaltplan für eine Beriebsüberwachung von vier parallel betriebenen Motoren M1, M2, M3 und M4 zu sehen. Eine entsprechende Schaltung für einen Parallelbetrieb von lediglich drei Motoren M1, M2 und M3 würde sich durch Weglassen des gestrichelt umrandeten Bereichs des Schaltplans ergeben.

Alle Motoren M1, M2, M3 und M4 sind zwischen die Netzphase L1 und den Nulleiter N geschaltet.

Der Schaltplan entsprecht in weiten Teilen dem aus der Fig. 2, es sind allerdings mit den zusätzlichen Motoren M3 und M4 für jeden zusätzlichen Motor M3 und M4 jeweils in der Zuleitung eine Sicherung 6 und ein Widerstand 7 und parallel zu dem Widerstand 7 eine Photodiode und ein Phototransistor geschaltet.

Wie in Fig. 2 dargestellt, wird die Kollektor-Emitter-Spannung eines jeden Phototransistors an einen jeweils daran angeschlossenen invertierenden Schmitt-Trigger 20 geleitet. Die Kollektoren der Phototransistoren 18 sind wie in Fig. 2 über einen Widerstand 19 an eine Gleichspannung VS angeschlossen.

Es sind insgesamt drei Antivalenz-Gatter 32, 33, 34 vorhanden, die eingangsseitig mit den Ausgängen von jeweils zwei benachbarten Schmitt-Triggern 20 verbunden sind. Auf diese Weise sind die Schmitt-Trigger 20 entweder mit einem oder mit zwei Antivalenz-Gattern 32, 33, 34 verbunden.

Am Ausgang eines jeden Antivalenz-Gatters 32, 33, 34 ist jeweils eine Diode 35, 36, 37 angeschlossen, und zwar ist die Anode jeweils unmittelbar mit dem Ausgang verbunden.

Alle Kathoden der Dioden 35, 36, 37 sind entweder direkt mit einer Sammelschiene 39 verbunden (s. Diode 35), oder sie lassen sich über Schalter S1 und S2 mit der Sammelschiene 39 verbinden.

Zwischen der Sammelschiene 39 und Masse liegt ein Widerstand 40. Der Widerstand bildet den Ausgang der zuvor beschriebenen digitalen Schaltung, die einen High-Pegel erzeugt, wenn auch nur der Strom eines Motors M1, M2, M3 oder M4 eine andere Phasenlage hat im Vergleich zu den anderen in die Motoren M1, M2, M3 oder M4 fließenden Strömen. Es lassen sich beliebig viele Teilschaltungen wie die mit der gestrichelten Linie umgebene an die Sammelschiene 39 anfügen, wobei dann die hinzukommenden Antivalenz-Gatter an den Ausgang des jeweils benachbarten Schmitt-Triggers 20 angeschlossen werden müßten.

Fig. 4 zeigt den Stromverlauf (Strom i(t) über der Zeit t) von zwei parallel betriebenen baugleichen Wechseltrommotoren M1 und M2 (vgl. Fig. 2).

Es hat sich bei einer technischen Realisierung gezeigt, daß bei ströungsfreiem Betrieb eine minimale Phasenverschiebung zwischen beiden (gleich großen) Strömen auftritt. Diese Phasenverschiebung verursacht beim Ansteigen und beim Abfallen der positiven Halbwelle der Ströme i(t) einen sehr schmalen Spannungspegel P (als High-Pegel) am Ausgang des Antivalenz-Gatters 21 (vgl. Fig. 2). Dieser Spannungspegel P wird durch den an den Ausgang des Antivalenzgatters angeschlossenen Kondensator 23 (vgl. Fig. 2) herausgefiltert, so daß er keine Störmeldung hervorruft.

In Fig. 5 ist zum einen der Stromverlauf 40 bei einem blockierten Wechselstrommotor zu sehen und zum andern der Stromverlauf 41 bei einem parallel dazu betriebenen Wechselstrommotor im ungestörten Betrieb. Bei blockiertem Motor treten größere Stromamplituden auf.
Wenn der Strom des blockierten Wechselstrommotors während einer poritiven Halbwelle erstmalig einen vorgegebenen Grenzwert übersteigt, liegt der andere Strom noch eine kurze Zeitspanne unter diesem Grenzwert. Während dieser Zeitspanne geben die Schmitt-Trigger 20 (vgl. Fig. 2) unterschiedliche Spannungspegel ab. Folglich liegt am Ausgang des nachgeschalteten Antivalenz-Gatters 21 ein High-Pegel H, der zudem breiter ist als der Spannungspegel P aus Fig. 4 bei ungestörtem Betrieb. Beim Sinken des zu dem ungestörten Wechselstrommotor fließenden Stromes unter den Grenzwert ist für eine Zeitspanne der Strom zu dem anderen Motor größer. Auch in diesem Falle liegt an dem Ausgang des Antivalenzgatters 21 ein High-Pegel H, der ebenfalls breiter ist als die Spannungspegel P aus Fig. 4.

Nur ein breiter High-Pegel H soll eine Störmeldung hervorrufen, folglich läßt sich aus der Dauer des High-Pegels am Ausgang des Antivalenzgatters 21 auf eine Betriebsstörung bei einem Wechselstrommotor M1 oder M2 schließen.

Da jedes Antivalenz-Gatter 21, 32, 33 und 34 (vgl. Fig. 2 und 3) jeweils lediglich zwei Ströme berücksichtigt, gelten die vorstehenden Überlegungen auch für die Betriebsüberwachung mit mehr als zwei Motoren. Sobald auch nur bei einem einzigen Antivalenz-Gatter 21, 32, 33 und 34 ein breiter High-Pegel H auftritt, wird eine Störmeldung ausgegeben.

## Patentansprüche

1. Verfahren zur Betriebsüberwachung von mindestens zwei parallel betriebenen Motoren (M1, M2, M3, M4), die zusammen aus gemeinsamen, von einem Wechselstrom durchflossenen Versorgungsleitungen eines Stromnetzes versorgt werden und denen jeweils eine Stromleitung zugeordnet ist, welche von einem von dem Betriebszustand des Motors (M1, M2, M3, M4) abhängigen Wechselstrom durchflossen wird,
**dadurch gekennzeichnet,**
daß jede Stromleitung in einem vorgebbaren Stromkreis mit dem zugeordneten Motor liegt, daß alle diese Stromkreise der Motoren zusammen von einer gemeinsamen Phase (L1, L2, L3) des Stromnetzes gespeist werden, daß die zeitgleich in den Stromleitungen auftretenden Stromstärken miteinander verglichen werden und daß eine Störmeldung ausgelöst wird, wenn das Verhältnis der Stromstärken zueinander von ihrem Verhältnis bei störungsfreiem Lauf der Motoren (M1, M2, M3, M4) abweicht.

2. Verfahren nach Anspruch 1,
dadurch gekennzeichnet,
daß zusätzlich die Spannung an mindestens einer Zuleitung, die von einer speisenden Netzphase (L1, L2, L3) zu einem oder mehreren daran angeschlossenen Motoren (M1, M2, M3, M4) führt, überwacht wird und daß beim Sinken mindestens einer der überwachten Spannungen unter einen Grenzwert eine Störmeldung ausgelöst wird.

3. Betriebsüberwachungseinrichtung mit mindestens zwei parallel betriebenen Motoren (M1, M2, M3, M4), die zusammen aus gemeinsamen, von einem Wechselstrom durchflossenen Versorgungsleitungen eines Stromnetzes versorgt werden und denen jeweils eine Stromleitung zugeordnet ist, welche von einem von dem Betriebszustand des Motors (M1, M2, M3, M4) abhängigen Wechselstrom durchflossen wird, mit einem Wandlungselement in jeder dieser Stromleitungen, welches ein zu dem jeweiligen Strom proportionales Signal erzeugt, und mit einer Vergleichseinrichtung mit Eingängen, wobei jeder Motor (M1, M2, M3, M4) einem Eingang zugeordnet ist und wobei im störungsfreien Betrieb die Signalpegel an allen Eingängen sich nicht voneinander unterscheiden und im Falle unterschiedlicher Signalpegel die Vergleichseinrichtung eine Störmeldung auslöst, insbesondere zur Ausführung eines Verfahrens nach Anspruch 1 oder 2,
**dadurch gekennzeichnet,**
daß jede Stromleitung in einem vorgebbaren Stromkreis mit dem zugeordneten Motor (M1, M2, M3, M4) liegt, daß alle diese Stromkreise der Motoren (M1, M2, M3, M4) zusammen von einer gemeinsamen Phase (L1, L2, L3) des Stromnetzes gespeist werden, daß die Stromleitungen jeweils ein Wandlungselement aufweisen, welches ein dem aus der gemeinsamen Phase (L1, L2, L3) zu dem Motor (M1, M2, M3, M4) fließenden Strom proportionales elektrisches Signal erzeugt, daß die Signale dieser Wandlungselemente parallel jeweils einem eigenen Pegelgeber zugeführt werden, der abhängig von der Größe des Eingangssignals lediglich einen von zwei möglichen Pegeln, die den beiden Zuständen der binären Logik entsprechen, an seinem Ausgang erzeugt, daß die dort am Ausgang zeitgleich auftretenden Pegel bei störungsfreiem Lauf der Motoren (M1, M2, M3, M4) den gleichen logischen Zuständen entsprechen, daß die Pegel an eine Vergleichseinrichtung geleitet werden und daß diese Vergleichseinrichtung eine Störmeldung hervorruft, wenn nicht diese zeitgleich anliegenden Pegel demselben logischen Zustand entsprechen.

4. Betriebsüberwachungseinrichtung nach Anspruch 3,
dadurch gekennzeichnet,
daß die Spannung an mindestens einer Zuleitung, die von einer gemeinsamen Versorgungsleitung kommt und für die Versorgung eines oder mehrerer Motoren (M1, M2, M3, M4) bestimmt ist, mittels einer Spannungsüberwachungseinrichtung (16) überwacht wird und daß bei Sinken mindestens einer der überwachten Spannungen unter einen vorgegebenen Grenzwert mittels der Spannungsüberwachungseinrichtung (16) eine Störmeldung ausgelöst wird.

5. Betriebsüberwachungseinrichtung nach Anspruch 3 oder 4,
dadurch gekennzeichnet,
daß das erzeugte elektrische Signal, das dem zu dem Motor (M1, M2, M3, M4) fließenden Strom proportional ist, ein kontinuierlicher Spannungsverlauf ist und daß die Pegelgeber Schmitt-Trigger (20) sind, die ausgangsseitig als mögliche logische Zustände lediglich entweder einen High-Pegel oder einen Low-Pegel abgeben.

6. Betriebsüberwachungseinrichtung nach Anspruch 5,
dadurch gekennzeichnet,
daß die Vergleichseinrichtung eingangsseitig eine digitale Schaltung enthält, die jedesmal dann ausgangsseitig einen vorgegebenen logischen Pegel erzeugt, wenn die logischen Zustände an den Ausgängen der Schmitt-Trigger (20) nicht alle gleich sind, und daß ab einer bestimmten Dauer dieses logischen Pegels die Störmeldung ausgelöst wird.

7. Betriebsüberwachungseinrichtung nach Anspruch 6,
dadurch gekennzeichnet,
daß genau zwei zu überwachende Motoren (M1, M2) vorhanden sind, daß die Betriebsüberwachungseinrichtung zwei Schmitt-Trigger (20) als Pegelgeber aufweist, daß die digitale Schaltung eingangsseitig ein Antivalenz-Gatter (21) enthält und daß die Ausgänge der beiden Schmitt-Trigger (20) zu diesem Antivalenz-Gatter (21) geführt sind (Fig. 2).

8. Betriebsüberwachungseinrichtung nach Anspruch 6,
dadurch gekennzeichnet,
daß die digitale Schaltung eingangsseitig mindestens ein Antivalenz-Gatter (32, 33, 34) enthält, daß jedem Antivalenz-Gatter (32, 33, 34) jeweils eine Diode (35, 36, 37) nachgeschaltet ist, daß deren Anode mit dem Ausgang des Antivalenz-Gatters (32, 33, 34) verbunden ist, daß deren Kathode zusammen mit den Kathoden der anderen Dioden (35, 36, 37) an einer gemeinsamen Sammelschiene (39) angeschlossen sind, daß die Sammelschiene (39) über einen den Ausgang der digitalen Schaltung bildenden ohmschen Widerstand (40) mit Masse verbunden ist und daß der Ausgang eines jeden Schmitt-Triggers (20) in der Weise an ein oder an zwei Antivalenz-Gatter (32, 33, 34) der digitalen Schaltung geführt ist, daß jedes Antivalenz-Gatter (32, 33, 34) mit den Ausgängen von genau zweien der Schmitt-Trigger (20) verbunden ist (Fig. 3).

9. Betriebsüberwachungseinrichtung nach Anspruch 8,
dadurch gekennzeichnet,
daß das/die Antivalenz-Gatter (32, 33, 34) zumindest teilweise über jeweils einen Schalter (S1, S2) an die Sammelschiene (39) zuschaltbar ist/sind.

10. Betriebsüberwachungseinrichtung nach einem der Ansprüche 6 bis 9,
dadurch gekennzeichnet,
daß der die Störmeldung hervorrufende Pegel ein High-Pegel ist, daß an die digitale Schaltung ausgangsseitig eine Reihenschaltung mit einem Widerstand (22) und einem Kondensator (23) angeschlossen ist, daß parallel zu dem Widerstand (22) ein weiterer Widerstand (24) mit einer in Reihe zu diesem angeordneten Diode (25) geschaltet ist, daß die Diode (25) mit ihrer Kathode am Ausgang der digitalen Schaltung angeschlossen ist und daß parallel zu dem Kondensator (23) ein weiterer Schmitt-Trigger (26) geschaltet ist, der im Falle einer Störmeldung einen High-Pegel abgibt.
